# EUROPÄISCHE PATENTSCHRIFT

(11) **EP 2 704 332 B1**
(45) Veröffentlichungstag und Bekanntmachung des Hinweises auf die Patenterteilung: **28.12.2016**
(21) Anmeldenummer: 13004155.1
(22) Anmeldetag: 22.08.2013
(51) Int. Cl.: H04B 3/54, H05B 37/02, H02J 13/00, H02J 4/00

(54) **Not-/Sicherheitsbeleuchtungsanlage und Verfahren zu deren Steuerung**
Emergency/safety lighting unit and method for controlling the same
Installation d'éclairage de secours/de sécurité et son procédé de commande

(30) Priorität: 31.08.2012 DE 102012017360
(43) Veröffentlichungstag der Anmeldung: 05.03.2014
(73) Patentinhaber: Eaton Safety IP GmbH & Co. KG, 12529 Schönefeld (DE)
(72) Erfinder: Prasuhn, Jürgen, 59494 Soest (DE)
(74) Vertreter: Grünecker Patent- und Rechtsanwälte PartG mbB

(56) Entgegenhaltungen:
- EP-A2- 2 477 462
- WO-A1-99/46868
- GB-A- 2 402 821

## Beschreibung

Die Erfindung betrifft eine Not-/Sicherheitsbeleuchtungsanlage und ein entsprechendes Verfahren zu deren Steuerung. Die Not-/Sicherheitsbeleuchtungsanlage weist zumindest eine zentrale Steuereinheit, eine AC- und DC-Spannungsversorgung, eine zwischen diesen beiden Spannungsversorgungen schaltbare Umschalteinrichtung, und eine Anzahl mit der zentralen Steuereinheit über eine Spannungsversorgungsleitung parallel verbundene Verbraucher auf. Entsprechende Not-/Sicherheitsbeleuchtungsanlagen und zugehörige Verfahren sind beispielsweise aus der DE 195 29751 A1, DE 198 14 366 A1, EP 1 170 849 B1 oder EP 2 194 762 A1 bekannt.

Die DE 195 29 751 A1 betrifft beispielsweise ein Verfahren zur zentralen Überwachung der Funktion von parallel geschaltenen elektrischen Verbrauchern an einem Wechselspannungsnetz sowie eine entsprechende Einrichtung zur Durchführung des Verfahrens. Eine solche Funktionsüberwachung kann bedeuten, dass die Funktionsfähigkeit oder der Einschaltzustand oder beides am Verbraucherort festgestellt wird und als Meldesignal zu einer zentralen Überwachungseinrichtung übertragen wird.

Die DE 198 14 366 A1 beschreibt ein Verfahren zur Steuerung wenigstens eines mit einer Steuereinrichtung über elektrische Versorgungsleitungen verbunden elektrischen Verbrauchers. Ein Steuersignal wird über die elektrischen Versorgungsleitungen an den elektrischen Verbraucher übertragen. Zur Kodierung einer Information wird die Versorgungsspannung in der Weise variiert beziehungsweise modifiziert, dass diese für eine bestimmte Zeitdauer in ihrem Maximalwert verändert wird oder unterbrochen wird. Durch die Abfolge der Maximalwertänderungen beziehungsweise -unterbrechungen der Versorgungsspannung ergibt sich ein kodiertes Informationssignal, das von dem Verbraucher detektiert und in ein entsprechendes binäres Signal umgewandelt wird.

In der EP 1170 849 B1 wird ein Verfahren und eine entsprechende Schaltungsanordnung zur Durchführung des Verfahrens beschrieben, wobei eine Steuereinrichtung über elektrische Versorgungsleitungen mit einem elektrischen Verbraucher verbunden ist. Ein Steuersignal wird über die elektrischen Versorgungsleitungen übertragen und die Steuereinrichtung verändert zur Kodierung des Steuersignals eine an den Verbraucher über die Versorgungsleitung übertragene Versorgungsspannung im Spannungswert oder unterbricht die Spannung.

EP 2 194 762 A1 beschreibt nicht nur ein periodisches Übermitteln von Prüf- und/oder Testabfragen und entsprechenden Prüf- und/oder Testantworten zwischen Zentralstation und einem Überwachungs- und Steuermodul einer Leuchte, sondern ebenfalls ein im Wesentlichen kontinuierliches Überwachen der Leuchte hinsichtlich zumindest eines Leuchtenparameters und ein Generieren eines entsprechenden Leuchtenstatus zumindest im Falle eines unzulässigen Leuchtenparameters.

DE 197 25 710 A1 offenbart ein Verfahren und eine Vorrichtung zur Leistungs- und Datenübermittlung auf gemeinsamen Leitungen. Die Übermittlung von Daten erfolgt bidirektional. Zur Datenübertragung ist ein spezieller Übertragungsmodus im Gegensatz zu einem Versorgungsmodus vorgesehen. Während der Übertragung eines Datenworts befindet sich das entsprechende System in dem Übertragungsmodus und zwischen den Datenworten im Versorgungsmodus.

DE 290 4 849 A1 offenbart ein Verfahren zur Übertragung von Information sowie eine Vorrichtung zur Durchführung dieses Verfahrens. Ein Informationssender speist Informationen in Effektversorgungsleitungen für mehrere angeschlossene Apparate ein. Der Ausgangsstrom des Senders wird für einen bestimmten Zeitraum unterbrochen. Dies bedingt einen Spannungsabfall. Die angeschlossenen Einheiten können diese Unregelmäßigkeit im Spannungsverlauf detektieren, sodass durch kurzzeitiges Unterbrechen des Stroms innerhalb einer Halbwelle vom Sender an die übrigen Einheiten Information übertragen werden können. Zwischen Spannungsverlauf und Stromverlauf wird in der Regel eine Phasenverschiebung vorliegen, die von in der Schaltung vorhandenen Kapazitäten und Induktivitäten abhängig ist.

DE 196 03 680 C1 beschreibt ein Verfahren zum selektiven Schalten und Steuern von Verbrauchern in einem Wechselstromkreis. Eine einzige Schwingung mit zwei Halbwellen einer Wechselspannung wird verwendet, um Information zum Schalten und zum Steuern an einen Verbraucher zu übermitteln. Dazu wird die Phasenlage jeder Halbwelle einer Schwingung geändert. Durch Verwendung einer einzigen Schwingung soll der Zeitbedarf für die Datenübertragung verringert werden. In der Zeitdauer eines Phasenanschnitts einer ersten Halbwelle der einzigen Schwingung ist eine Information bezüglich der Auswahl eines einzelnen oder aller Verbraucher enthalten, während in der Zeitdauer des Phasenanschnitts der anderen Halbwelle dieser einzigen Schwingungen eine Information bezüglich der Leitungsaufnahme enthalten ist. Für die Zeit der entsprechenden Datenübertragung ist die Last im Stromkreis abgeschaltet.

DE 3 828 271 A1 offenbart ein Verfahren zur seriellen Übertragung von Telegrammen, wobei jedes Telegramm in Wörter unterteilt wird, und die Übertragung des ersten Wortes mit einem Startimpuls beginnt und dann je Wort ein Impuls übertragen wird, wobei der zeitliche Abstand zum vorhergehenden Impuls der Wertigkeit des Wortes entspricht. Dadurch ergibt sich eine Priorisierung der Kommunikation.

DE 195 48 744 beschreibt eine Signal- und Gegensprechanlage für die Haustechnik. Über einen Zwei-Draht-Bus sind verschiedene Endgeräte mit einem zentralen Steuergerät verbunden. Jedes Endgerät weist eine Befehlssende- und Empfangsschaltung auf, die aus einem Pegelschalter und einem Pegeldetektor aufgebaut ist. Mittels eines Mikroprozessors wird ein Sendebefehl dadurch generiert, dass der Pegelschalter dem gewünschten Befehlsprotokoll folgend in schneller Folge geschlossen und geöffnet wird. Als Folge hiervon fließt ein höherer Strom über den Bus und damit durch einen allen Geräten gemeinsamen Arbeitswiderstand im zentralen Steuergerät. Es ergibt sich dadurch ein erhöhter Spannungsabfall über dem Arbeitswiderstand, sodass die verbleibende Busspannung für alle anderen Geräte verringert wird. Dem Befehlsprotokoll wird durch das zentrale Steuergerät eine Adresse des angesprochenen Geräts beigefügt, sodass dieses angesprochene Gerät sich über seinen Pegeldetektor erkennen kann und den Befehl in einer entsprechenden Logikschaltung auswerten kann. Wird der Arbeitswiderstand überbrückt, können keine Befehle durch Strommodulation gesendet werden.

DE 28 35 594 offenbart ein Verfahren zur Übertragung von Information und eine entsprechende Vorrichtung. Die Vorrichtung umfasst eine Steuerungsvorrichtung sowie eine Anzahl von in Parallelschaltung angeschlossenen Einheiten. Spannung oder Strom werden zur Ermittlung eines Befehlssignals unterbrochen, wobei ein Halbwellenmuster mit Unterbrechungen erzeugt wird. D. h., es werden einzelne positive und/oder negative Halbwellen aus dem Strom- oder Spannungssignal entfernt. Es besteht dabei die Möglichkeit, zwischen zwei fehlenden Halbwellen die Anzahl der vollständigen Halbwellen zu bestimmen. Diese Anzahl wird mit einer abgespeicherten Anzahl verglichen und bei Übereinstimmung wird dies als ein entsprechender Befehl interpretiert.

EP 2 477 462 A2 beschreibt eine Dimmsteuerung für eine Leuchtengruppe. Diese Steuerung erfolgt durch eine Phasenanschnitts- oder Phasenabschnittssteuerung. Durch die Steuerung ist eine Dimmung aller Leuchten um beispielsweise 30% möglich.

WO 99/46848 A1 beschreibt ein Zwei-Draht-Kommunikationssystem zur Übermittlung von Daten in beide Richtungen. Die Übermittlung der Daten erfolgt analog durch Verwendung von mehreren Impulsen.

Vorliegende Erfindung und die genannten Druckschriften beschreiben eine Not-/Sicherheitsbeleuchtungsanlage mit einer Vielzahl Verbrauchern, wie Sicherheits-, Rettungszeichenleuchten oder anderen Leuchten. Für solche Anlagen gibt es eine Reihe von elektrotechnischen und lichttechnischen Vorschriften wie beispielsweise Normen DIN VDE 0108, EN 50172, IEC 60364-5-56 oder DIN EN 1838. In diesen Normen wird beschrieben, wie beispielsweise im Notfall die verschiedenen Leuchten der Anlage versorgt werden, welche Kontrollen zur Sicherstellung der Funktionsbereitschaft oder auch zur Funktionsüberwachung notwendig sind. Weiterhin sind Protokollierungen von Testergebnissen und spezifische brandschutztechnische Anforderungen festgelegt. Insbesondere wird auch eine zentrale Steuerbarkeit aller solcher spezifischer Leuchten einer Not-/Sicherheitsbeleuchtungsanlage erforderlich, da eine direkte Steuerung oder Einflussnahme beispielsweise mittels eines normalen Lichtschalters in der Versorgungsleitung aus Sicherheitsgründen nicht zulässige ist, da bei einem Netzausfall der bestimmungsgemäße Betrieb der Not-/Sicherheitsleuchten nicht sichergestellt ist. Stattdessen erfolgt die Steuerung und Überwachung einer Vielzahl solcher Leuchten immer zentral. Dabei hat es sich insbesondere als vorteilhaft erwiesen, wenn für eine solche Steuerung/Überwachung keine zusätzlichen Datenleitungen zwischen beispielsweise einer zentralen Steuereinheit und den Verbrauchern benötigt werden. Stattdessen erfolgt die Steuerung und Überwachung mittels entsprechender Informationssignale, die über die Spannungsversorgungsleitungen übertragen werden.

Um neben der Versorgungsspannung keine zusätzlichen Signale beispielsweise der Versorgungsspannung aufmodulieren zu müssen, hat es sich weiterhin als vorteilhaft herausgestellt, wenn die entsprechende Versorgungsspannung direkt zur Übermittlung von Informationssignalen beeinflusst wird, siehe beispielsweise DE 198 14 366 A1 oder EP 1 170 849 B1.

Bei den eingangs beschriebenen Verfahren und Vorrichtungen erfolgte in der Regel eine Generierung der Informationssignale mittels kodierter Phasenanschnitte der Netzwechselspannung, d. h. der AC-Versorgungsspannung. Nulldurchgänge der Versorgungsspannung wurden zur Triggerung der Phasenanschnitte verwendet.

Der Erfindung liegt die Aufgabe zugrunde, entsprechende Informationssignale unabhängig von der Art der Versorgungsspannung in sicherer und einfacher Weise an den Verbraucher zu übermitteln.

Diese Aufgabe wird erfindungsgemäß im Zusammenhang mit der eingangs beschriebenen Not-/Sicherheitsbeleuchtungsanlage dadurch gelöst, dass die zentrale Steuereinheit eine zumindest der DC-Spannungsversorgung zugeordnete Umpoleinrichtung aufweist, welche zur binären Kodierung eines Informationssignals mittels einer Folge von Polaritätswechseln der von der Spannungsversorgung bereitgestellten Versorgungsspannung ansteuerbar ist, welches kodierte Informationssignale über die Versorgungsspannung von der zentralen Steuereinheit über die Spannungsversorgungsleitung an wenigstens einen Verbraucher übermittelbar ist.

Entsprechende Informationssignale ermöglichen beispielsweise, einen Verbraucher oder auch alle mit der zentralen Steuereinheit verbundenen Verbraucher in ihrem Status zu beeinflussen. Dies kann ein Ein- oder Ausschalten, eine Dimmung um einen bestimmten Prozentsatz oder dergleichen umfassen. Die Umschalteinrichtung dient in einfacher Weise dazu, die an ihrem Eingang anliegende DC-Versorgungsspannung umzupolen, sodass die von der Umschalteinrichtung abgegebene Spannung ihre Polarität entsprechend wechselt. Diese Polaritätswechsel haben eine bestimmte zeitliche Abfolge, wobei in dieser zeitlichen Abfolge ein kodiertes Informationssignal enthalten ist. Der Verbraucher oder ein dem Verbraucher vorgeschaltetes Auswerteund Steuermodul erfasst die Polaritätswechsel und wertet sie zur Wiederherstellung des kodierten Informationssignals aus. Das kodierte Informationssignal entspricht einem binären Bitmuster.

Es sind unterschiedliche Möglichkeiten zur Anordnung der Umpoleinrichtung in der zentralen Steuereinheit möglich. Beispielsweise kann die Umpoleinrichtung zwischen DC-Spannungsversorgung und der Umschalteinrichtung angeordnet sein. Die Umschalteinrichtung dient zum Umschalten zwischen DC- und AC-Spannungsversorgung. Durch die entsprechende Anordnung der Umpoleinrichtung ist diese nur bei DC-Versorgungsspannung einsetzbar.

Eine weitere Anordnung kann sich dadurch ergeben, wenn die Umpoleinrichtung zwischen Umschalteinrichtung und Spannungsversorgungsleitung angeordnet ist. D. h., in diesem Fall wird die Umpoleinrichtung gegebenenfalls nur dann eingesetzt werden, wenn eine DC-Versorgungsspannung anliegt. Im Falle einer AC-Versorgungsspannung kann die Umpoleinrichtung unwirksam geschaltet sein, beziehungsweise in einem festen Zustand verwendet werden. Dieses unwirksam schalten der Umpoleinrichtung kann auch dann von Vorteil sein, wenn keine Informationsübertragung erfolgt, um Verluste an den Schalteinheiten der Umpoleinrichtung zu vermeiden.

Um innerhalb der zentralen Steuereinheit Versorgungsspannung und/oder Strom von AC- oder DC-Spannungsversorgung zu überwachen, kann die zentrale Steuereinheit eine Strom-/Spannungserfassungseinrichtung aufweisen. Diese kann beispielsweise feststellen, dass keine AC-Versorgungsspannung anliegt und dann eine Umschaltung mittels der Umschalteinrichtung auf DC-Versorgungsspannung veranlassen.

Die AC-Spannungsversorgung ist in der Regel die Netzspannungsversorgung, während die DC-Spannungsversorgung durch eine Gruppenbatterieanlage, Zentralbatterieanlage oder dergleichen gebildet ist.

In der Regel wird ein Stromkreis zu Verbrauchern ab einer letzten Überstromschutzeinrichtung in einem Verteiler einer Stromversorgungsanlage als Endstromkreis definiert. Dabei besteht die Möglichkeit, dass bei vorliegender Erfindung eine Umpoleinrichtung zumindest jedem Endstromkreis zugeordnet ist.

Für einen solchen Endstromkreis gelten verschiedene Bedingungen, wie beispielsweise dass keine Schalter oder Schaltelemente vorhanden sein dürfen. Nur Schalter zur zentralen und gruppenweisen Schaltung sind gegebenenfalls zugelassen. Weiterhin ist vorgeschrieben, dass in einem Endstromkreis der Sicherheitsbeleuchtung nicht mehr als 20 Verbraucher und insbesondere Leuchten angeschlossen sind.

D. h., gemäß beschriebenem Merkmal kann durch eine Umpoleinrichtung eine Steuerung aller Leuchten beziehungsweise Verbraucher eines Endstromkreises erfolgen.

Zum Umpolen einer Versorgungsspannung sind verschiedene Möglichkeiten denkbar. Erfindungsgemäß kann beispielsweise die Umpoleinrichtung eine Vollbrückenanordnung von Schalteinheiten aufweisen. In der Regel sind die Schalteinheiten Halbleiterschalter, die in entsprechender Weise in Vollbrückenanordnung verschaltet sind. Ebenfalls denkbar sind elektromechanische Schalteinheiten, die allerdings in der Regel mehr Platz, einen höheren Wartungsaufwand und mehr Verschleiß erfordern beziehungsweise aufweisen.

Um bei dem Verbraucher in einfacher Weise eine Detektion des Polaritätswechsels der Versorgungsspannung zu ermöglichen, kann der Verbraucher eine Umpoldetektionseinrichtung zur Detektion von Polaritätswechseln der Versorgungsspannung aufweisen. Je nach Art des Verbraucher oder der Verbraucher kann es sich als vorteilhaft erweisen, wenn die Polaritätswechsel im Strom beziehungsweise in der Spannung detektiert werden, sodass es denkbar ist, dass durch die Umpoldetektionseinrichtung Strom und/oder Spannung der Versorgungsspannung überwachbar sind.

Die Umpoldetektionseinrichtung kann Teil einer Steuer-/Überwachungseinrichtung sein, die dem Verbraucher zugeordnet ist. In diesem Zusammenhang ist es beispielsweise möglich, dass die Umpoldetektionseinrichtung nur entsprechende Polaritätswechsel detektiert und ein entsprechendes Signal generiert. Eine Umsetzung dieses Signals in ein binäres Informationssignal kann durch ein anderes Bauteil der Steuer-/Überwachungseinrichtung erfolgen. So ist es beispielsweise denkbar, dass die Steuer-/Überwachungseinrichtung eine eine Folge von Polaritätswechseln in ein binäres Informationssignal umsetzende Umwandeleinrichtung aufweist. Die Umwandeleinrichtung erhält von der Umpoldetektionseinrichtung ein Signal zur Kennzeichnung der Polaritätswechsel und generiert aus diesem Signal das entsprechende binäre Informationssignal, das dem ursprünglich durch die zentrale Steuereinheit kodierten Informationssignal entspricht.

Das Steuersignal kann, siehe die obigen Ausführungen, eine entsprechende Steuerung des Verbrauchers bewirken, wie Ein- und Ausschalten, Dimmung um eine bestimmte Prozentzahl oder dergleichen. Andere Steuerungsmöglichkeiten sind ebenfalls denkbar, wie Durchführen eines Tests, Abfragen von Statusinformationen oder dergleichen. Um in diesem Zusammenhang einen bestimmten Verbraucher, eine Gruppe von Verbrauchern, oder auch alle Verbraucher ansprechen zu können, kann das Informationssignal zusätzlich zur Steuerinformation zur eigentlichen Steuerung des Verbrauchers eine Adressinformation zum selektiven Ansprechen eines jeden Verbrauchers oder zum gruppenweisen Ansprecher einer Mehrzahl von Verbrauchern umfassen. Selbstverständlich sind auch alle mit der zentralen Steuereinheit verbundenen Verbraucher gleichzeitig ansprechbar, um beispielsweise alle Verbraucher ein- oder auszuschalten.

Um bei bereits vorhanden Verbrauchern eine entsprechende Steuerung nach vorliegender Anmeldung zu ermöglichen, kann die Steuer-/Überwachungseinrichtung als separates mit jeweils dem Verbraucher verbindbares oder in einem solchen Verbraucher einsetzbares Modul ausgebildet sein.

Eine entsprechende Informationsübertragung im Falle einer AC-Versorgungsspannung kann beispielsweise in der oben beschriebenen Weise nach den entsprechenden zitierten Druckschriften erfolgen. D. h., es besteht die Möglichkeit, dass bei AC-Spannungsversorgung eine Strom-/Spannungsvariationseinrichtung zur binären Kodierung eines über die Spannungsversorgungsleitung zu übertragenden, in der Versorgungsspannung enthaltenen Informationssignals vorgesehen ist.

D. h., es würden beispielsweise zwei unterschiedliche Einrichtungen je nach Leistungsversorgung verwendet.

Es ist allerdings ebenfalls denkbar, dass die Umpoleinrichtung als Strom-/Spannungsvariationseinrichtung bei AC-Spannungsversorgung einsetzbar ist. Die Umpoleinrichtung umfasst entsprechende Schalteinheiten, die auch als Strom-/Spannungsvariationseinrichtung bei AC-Spannungsversorgung einsetzbar sind. D. h., durch die Umpoleinrichtung könnte bei AC-Betrieb eine Steuerung und gegebenenfalls auch Adressierung mittels einer Folge von Phasen mit Spannungsunterbrechung und Phasen ohne Spannungsunterbrechung in Abhängigkeit von der zu übermittelnden Information erfolgen. Weiterhin kann die Umpoleinrichtung gegebenenfalls so eingesetzt werden, dass sie quasi als Gleichrichter bei AC-Spannungsversorgung Verwendung findet, sodass bei AC-Betrieb die Kommunikation mit den Verbrauchern nicht durch Spannungsunterbrechungen oder dergleichen kodiert wird, sondern durch eine bitmusterabhängige Folge von Phasen mit Gleichrichtung und Phasen ohne Gleichrichtung.

Im letzten Fall ergibt sich als weiterer Vorteil, dass keine Unterbrechungen der Versorgungsspannung auftreten, um das entsprechende Informationssignal an den Verbrauchern zu übertragen.

Um durch die zentrale Steuereinheit entsprechende Rückmeldungen von einem oder jedem Verbraucher erhalten zu können, kann der Verbraucher eine Belastungseinrichtung zur Beeinflussung eines Laststroms aufweisen. Die entsprechende Beeinflussung des Laststroms beziehungsweise der entsprechenden Spannung wird durch die Strom-/Spannungserfassungseinrichtung der zentralen Steuereinheit erfasst und ausgewertet. In diesem Zusammenhang ist es weiterhin denkbar, dass die Beeinflussung des Laststroms beziehungsweise der entsprechenden Spannung aus einer Anzahl von Belastungspulsen gebildet ist, um ein Rückinformationssignal zu kodieren. D. h., die entsprechende Informationsübertragung kann ebenfalls in umgekehrter Richtung vom Verbraucher zur zentralen Steuereinheit erfolgen, wobei entsprechende zeitsequentielle Belastungspulse das kodierte Rückinformationssignal bestimmen.

Die entsprechenden Verbraucher sind bei einer Not-/Sicherheitsbeleuchtungsanlage beispielsweise unterschiedliche Leuchten wie Sicherheits-, Rettungszeichenleuchte oder auch andere Leuchten. Die entsprechende Anlage kann auch andere Verbraucher umfassen, wie Brandmelder, akustische oder optische Signalgeber oder dergleichen. Alle diese sind entsprechend steuerbar und überwachbar.

Bei einer Reihe von Leuchten der entsprechenden Not-/Sicherheitsbeleuchtungsanlage ist es von Vorteil, wenn diese ein elektrisches oder elektronisches Vorschaltgerät aufweisen. Auch ein solches Vorschaltgerät ist insbesondere als Teil des Verbrauchers von der zentralen Steuereinheit ansteuerbar und überwachbar. Mittels eines elektronischen Vorschaltgerätes kann beispielsweise eine Dimmung einer Leuchte in einfacher Weise erfolgen.

Um zu verhindern, dass eine Störung der Anlage durch insbesondere elektrische oder elektronische Beeinflussungen erfolgt, kann die Steuer-/Überwachungseinrichtung eine Überspannschutzeinrichtung vor dem Gleichrichter aufweisen. Entsprechende Einrichtungen sind auch in der zentralen Steuereinheit anordbar.

Um in direkter Weise mittels der Steuer-/Überwachungseinrichtung eine Einflussnahme auf den Verbraucher realisieren zu können, kann die Steuer-/Überwachungseinrichtung einen Steuerungsanschluss zum Steuern/Überwachen einer Verbrauchersteuereinrichtung, wie Vorschaltgerät oder dergleichen, aufweisen. D. h., durch die Steuer-/Überwachungseinrichtung erfolgt eine Steuerung beispielsweise des Vorschaltgerätes zum Dimmen einer Leuchte mittels des dekodierten Informationssignals, das aus den Polaritätswechseln der Versorgungsspannung wiederhergestellt wurde.

Analog erfolgt verfahrensmäßig eine entsprechende Steuerung und/oder Überwachung von mit einer zentralen Steuereinheit über eine Spannungsversorgungsleitung verbunden Verbrauchern. Zu dem Informationssignal sei noch angemerkt, dass dieses bei Übertragung von nur Steuerinformationen weniger digitale Information übermittelt als wenn gleichzeitig Steuerinformation und Adressinformation übertragen wird. D. h., dass bei Übermittlung von Adress- und Steuerinformation das generierte Bitmuster in der Regel länger ist, als bei Übertragung von nur Steuerinformation. Weiterhin besteht die Möglichkeit, dass die Adressinformation auch vorab zur Steuerinformation und unabhängig von dieser übertragen wird, um beispielsweise bereits einen Verbraucher oder eine Gruppe von Verbrauchern auszuwählen, denen dann in einem darauf folgenden Zeitintervall die entsprechende Steuerinformation übermittelt wird. Selbstverständlich besteht ebenfalls die Möglichkeit, in einem Informationssignal mit einem entsprechenden langen Bitmuster beide Informationen, d. h. Steuerinformation und Adressinformation zu übertragen. In der Regel kann in diesem Zusammenhang die Adressinformation direkt vor der Steuerinformation in dem Informationssignal enthalten sein.

Zusammenfassend sei nochmals darauf verwiesen, dass erfindungsgemäß ein Umpolen insbesondere der DC-Versorgungsspannung in einer zeitlichen Folge abhängig von einem Bitmuster erfolgt, welches eine entsprechende Adress- und/oder Steuerinformation kodiert, um auf diese Weise eine Reihe von Verbrauchern selektiv, einzeln oder auch gruppenweise anzusprechen und zu steuern.

Im Folgenden werden vorteilhafte Ausführungsbeispiels der Erfindung anhand der in der Zeichnung beigefügten Figuren näher erläutert.

Es zeigen:
- Figur 1: eine Prinzipdarstellung einer erfindungsgemäßen Not-/Sicherheitsbeleuchtungsanlage mit einer Mehrzahl von Verbrauchern und einer zentralen Steuereinheit,
- Figur 2: ein Ausführungsbeispiel für eine Umpoleinrichtung als Teil der zentralen Steuereinheit nach Figur 1;
- Figur 3: eine Prinzipdarstellung eines Verbrauchers mit elektronischem Vorschaltgerät;
- Figur 4: den Verbraucher nach Figur 3 mit einem ersten Ausführungsbeispiel einer zugeordneten Steuer-/Überwachungseinrichtung;
- Figur 5: den Verbraucher nach Figur 3 mit einem zweiten Ausführungsbeispiel einer Steuer-/Überwachungseinrichtung, und
- Figur 6: Prinzipskizzen zur Darstellung einer mehrfach umgepolten DC-Versorgungsspannung und eines generierten Bitmusters.

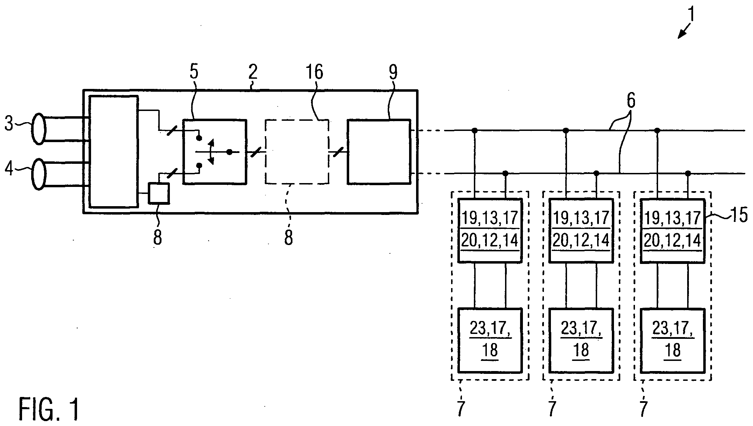

Figur 1 zeigt eine Prinzipskizze eines Ausführungsbeispiels einer erfindungsgemäßen Not-/Sicherheitsbeleuchtungsanlage 1. Diese umfasst zumindest eine zentrale Steuereinheit 2 und eine Mehrzahl mit dieser über eine Spannungsversorgungsleitung 6 verbundenen Verbraucher 7. Die Verbraucher 7 sind beispielsweise Sicherheitsleuchten, Rettungszeichenleuchten, andere Leuchten oder auch gegebenenfalls Brandmelder, optische oder akustische Signalgeber oder dergleichen. Die Verbraucher 7 sind parallel mit der Spannungsversorgungsleitung 6 verschaltet. Diese umfasst bei dem dargestellten Ausführungsbeispiel zwei Versorgungsleitungen (der üblicherweise erforderliche Schutzleiter ist nicht abgebildet).

Die zentrale Steuereinheit 2 dient beispielsweise zur Versorgung, Steuerung und Überwachung eines Endstromkreises, in dem nach aktueller Normenlage bis zu 20 als Verbraucher angeordnet sein können.

Die zentrale Steuereinheit 2 ist mit einer AC-Spannungsversorgung 3 und einer DC-Spannungsversorgung 4 zur Bereitstellung von Wechselspannung als Netzspannung und Gleichspannung von einer Batterieanlage als Sicherheitsstromquelle verbunden. Eine solche Batterieanlage ist beispielsweise eine Zentralbatterieanlage oder eine Gruppenbatterieanlage.

Bei Ausfall der Netzspannung, d. h. der AC-Spannungsversorgung 3, erfolgt ein Umschalten auf die DC-Spannungsversorgung 4 mittels einer Umschalteinrichtung 5. Diese ist Teil der zentralen Steuereinheit 2. Ein weiteres Teil der zentralen Steuereinheit 2 ist zumindest eine Umpoleinrichtung 8. Diese ist bei einem ersten Ausführungsbeispiel zwischen Umschalteinrichtung 5 und DC-Spannungsversorgung 4 angeordnet. Es ist ebenfalls möglich, siehe die gestrichelte Darstellung der Umpoleinrichtung 8, dass diese zwischen Umschalteinrichtung 5 und der Spannungsversorgungsleitung 6 angeordnet ist. Dabei ist weiterhin eine Strom-/Spannungserfassungseinrichtung 9 zwischen Umpoleinrichtung 8 und Spannungsversorgungsleitung 6 in der zentralen Steuereinheit 2 vorgesehen. Diese Strom-/Spannungserfassungseinrichtung dient zur Überwachung der von der zentralen Steuereinheit 2 ausgegebenen Leistungsversorgung sowie auch zur Erfassung von gegebenenfalls von den Verbrauchern 7 an die zentrale Steuereinheit 2 übermittelten Belastungspulsen. D. h., die Strom-/Spannungserfassungseinrichtung 9 erfasst entsprechende Änderungen von Strom und/oder Spannung und veranlasst gegebenenfalls entsprechende Reaktionen.

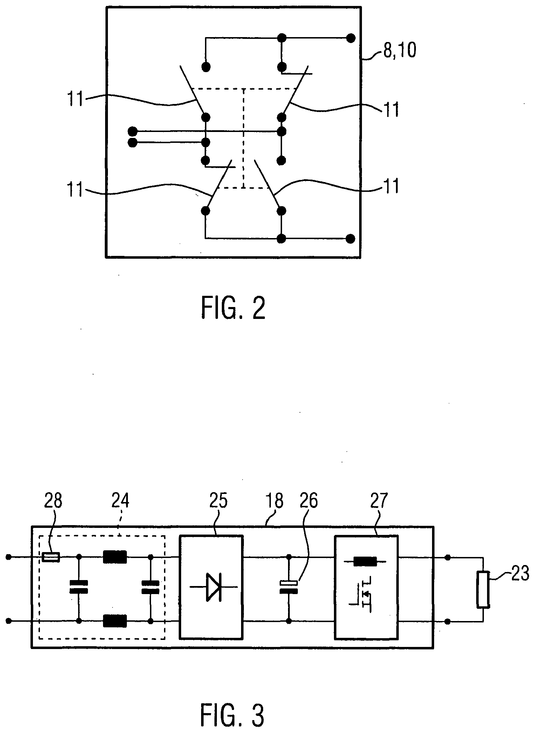

Die verschiedenen Verbraucher können eine unterschiedliche Anzahl von Bauteilen aufweisen. Bei Leuchten als Verbrauchern 7 weisen diese zumindest ein Leuchtelement 23 auf, siehe auch Figuren 3 bis 5. Bei bestimmten Leuchtelementen 23 umfassen die Verbraucher 7 außerdem ein elektrisches oder elektronisches Vorschaltgerät 18 und gegebenenfalls eine Belastungseinrichtung 17, eine Umpoldetektionseinrichtung 12, eine Steuer-/Überwachungseinrichtung 13, eine Umwandeleinrichtung 14, eine Überspannungsschutzeinrichtung 19, eine Adressiereinrichtung (nicht dargestellt) und gegebenenfalls einen Gleichrichter 20.

In Figur 1 sind die verschiedenen Verbraucher 7 durch zwei quadratische Untergruppen dargestellt. Allerdings können beide Untergruppen in einem Gehäuse, d. h. direkt in dem Verbraucher angeordnet sein. Ebenfalls besteht die Möglichkeit, dass beispielsweise eine der Untergruppen, siehe Bezugszeichen 15, als Modul ausgebildet ist. Dieses ist dem entsprechenden Verbraucher 7 zuordbar und insbesondere mit diesem von außen oder als eingebautes Modul von innen verbindbar. Durch das Modul 15 erfolgt beispielsweise eine Anpassung von Verbrauchern ohne Möglichkeit zur Detektion von Polaritätswechseln der Versorgungsspannung gemäß Erfindung.

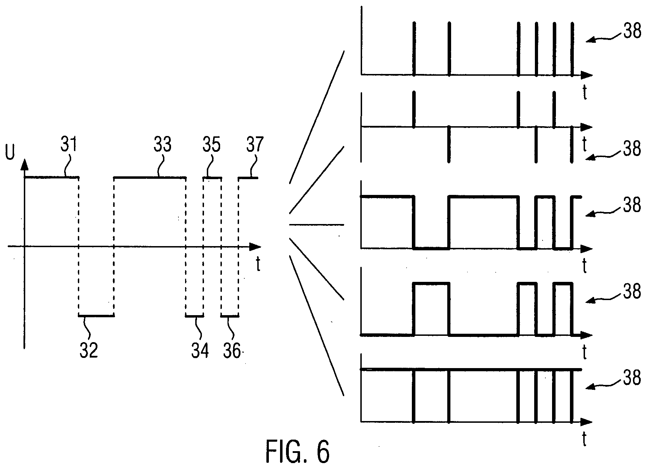

In Figur 2 ist prinzipiell die Umpoleinrichtung 8 nach Figur 1 dargestellt. Wie bereits dort ausgeführt, kann diese nur der DC-Spannungsversorgung 3 oder auch dieser und der AC-Spannungsversorgung 4 zugeordnet sein. Die Umpoleinrichtung 8 ist in Vollbrückenanordnung 10 einer Reihe von Schalteinheiten 11 ausgeführt. Je nach Stellung der verschiedenen Schalteinheiten 11 erfolgt entsprechend ein Polaritätswechsel der DC-Versorgungsspannung, siehe beispielsweise Figur 6. Bei der dargestellten Stellung der Schalteinheiten 11 erfolgt ein Durchlassen der Versorgungsspannung ohne Polaritätswechsel, während durch Umschalten der jeweils diagonal zueinander angeordneten Schalteinheiten 11 in die jeweils andere Schalterstellung ein Polaritätswechsel der DC-Versorgungsspannung stattfindet.

An dieser Stelle sei angemerkt, dass die Schalteinheiten 11 nach Figur 2 nur prinzipiell dargestellt sind, wobei in der Regel Halbleiterschalteinheiten verwendet werden, die keine mechanischen oder elektromechanischen Bauteile aufweisen. Allerdings ist eine Realisierung der Umpoleinrichtung 8 durch beispielsweise elektromechanische Schalteinheiten 11 möglich.

Figur 3 zeigt Teile des Verbrauchers 7 nach Figur 1 und insbesondere den Verbraucher 7 mit Leuchtelement 23 und elektronischem Vorschaltgerät 18. Das elektronische Vorschaltgerät 18 weist verschiedene Bauteile auf, die an sich bekannt sind, wie Sicherung 28, Funkentstörfilter 24, Gleichrichter 25, Filterkondensator 26 und Steuerschaltung 27. Die Steuerschaltung 27 dient beispielsweise als Wandlerstufe zur Versorgung des Leuchtelements 23 mit der zusätzlichen Möglichkeit zum Ein- und Ausschalten sowie zum Dimmen des Leuchtelements 23.

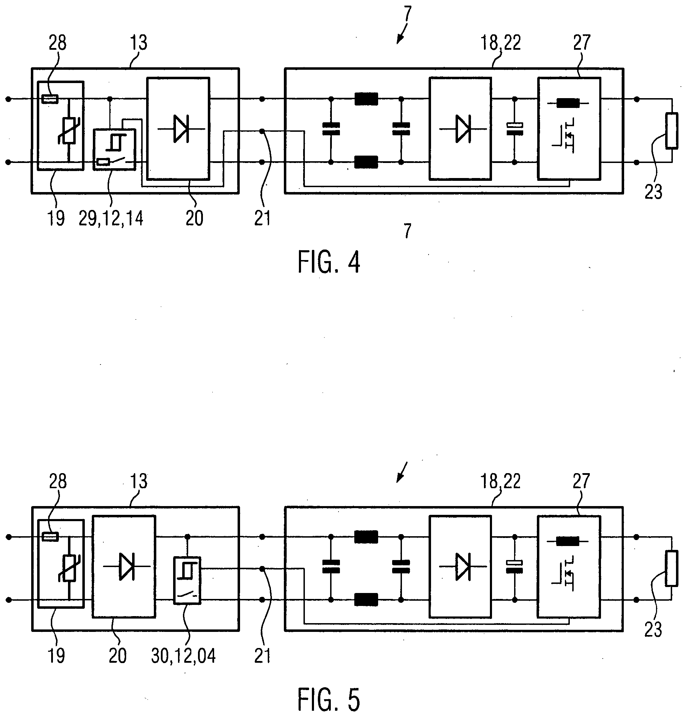

In den Figuren 4 und 5 sind zwei Ausführungsbeispieles eines Verbrauchers 7 mit unterschiedlichen Steuer-/Überwachungseinrichtungen 13 dargestellt. Die übrigen Teile, siehe Leuchtelement 23 und Vorschaltgerät 18 sind in beiden Ausführungsbeispielen gleichartig aufgebaut, siehe auch Figur 3, wobei bei den dargestellten Ausführungsbeispielen nur die entsprechende Sicherung 28 nicht mehr im Vorschaltgerät 18, sondern jetzt jeweils in der Steuer-/Überwachungseinrichtung 13 angeordnet ist.

Die Steuer-/Überwachungseinrichtung umfasst eine Überspannungsschutzeinrichtung 19 mit einem spannungsabhängigen Widerstand (Varistor) und der Sicherung 28, eine Gleichrichter 20 sowie eine Spannungsdetektionseinrichtung 30 beziehungsweise Stromdetektionseinrichtung 29 und einem Mikroprozessor (nicht dargestellt) mit Kodierschalter zur Vergabe einer Geräteadresse.

Nach Figur 5 erfolgt durch die Steuer-/Überwachungseinrichtung 13 eine Überwachung der Spannung, um entsprechende Polaritätswechsel in der Spannung zu detektieren, und ein entsprechendes Signal zu generieren. Bei dem Ausführungsbeispiel nach Figur 4 erfolgt stattdessen eine Stromüberwachung durch die Stromdetektionseinrichtung 30. Allerdings erfolgt analog auch bei diesem Ausführungsbeispiel eine Detektion der entsprechenden Polaritätswechsel und eine Generierung eines zugehörigen Signals. Dieses Signal wird in ein entsprechendes digitales Informationssignal in Form eines Bitmusters umgewandelt, siehe auch Figur 6. Das digitale Informationssignal entspricht dem in der zentralen Steuereinheit 2 in Spannung oder Strom einkodiertem Informationssignal. Dieses Informationssignal dient zur Steuerung und gegebenenfalls zur Adressierung eines, mehrerer oder aller Verbraucher.

Gegebenenfalls kann die Steuer-/Überwachungseinrichtung 13 zur Generierung eines solchen digitalen Steuersignals beziehungsweise Bitmuster eine Umwandeleinrichtung 14 aufweisen, siehe auch Figur 1. Dies empfängt von der Umpoldetektiereinrichtung 12 der entsprechenden Spannungsdetektiereinrichtung 30 beziehungsweise Stromdetektiereinrichtung 29 ein Polaritätswechsel- oder Umpolsignal und generiert aus diesem das digitale Informationssignal beziehungsweise entsprechende Bitmuster.

Da durch das Informationssignal insbesondere eine Steuerung des Verbrauchers erfolgen soll, ist bei den dargestellten Ausführungsbeispielen eine Verbindungsleitung zwischen dem Mikroprozessor der Umpoldetektiereinrichtung 12/Umwandeleinrichtung 14 und Steuerschaltung 27 des Vorschaltgerätes 18 vorgesehen, siehe auch Steueranschluss 21 an der Steuer-/Überwachungseinrichtung 13. Mittels dieser Verbindungsleitung kann ein Ein-/Ausschalten und Dimmen des entsprechenden Leuchtelements 23 über die zugeordnete Steuerschaltung 27 als Teil einer Laststeuereinrichtung 22 vorgenommen werden.

An dieser Stelle sei noch angemerkt, dass bei AC-Versorgungsspannung eine Variation von Strom/Spannung durch eine separate Strom-/Spannungsvariationseinrichtung 16 erfolgen kann, wie sie beispielsweise in der EP 1 170 849 B1 beschrieben ist. Diese könnte beispielsweise nur bei AC-Spannungsversorgung eingesetzt werden, während sie bei DC-Spannungsversorgung durch die entsprechende Umpoleinrichtung 8 zur Kodierung eines Informationssignals ersetzt wird. Es ist allerdings ebenfalls möglich, dass die Umpoleinrichtung 8, siehe beispielsweise die alternative Anordnung nach Figur 1, auch bei AC-Versorgungsspannung eingesetzt wird. D. h., die Netzwechselspannung wird durch die Umpoleinrichtung derart beeinflusst, dass eine Folge mit Phasen mit Spannungsunterbrechung und Phasen ohne Spannungsunterbrechung in Abhängigkeit der zu übermittelnden Steuerinformation erzeugt wird, wobei das Informationssignal nur eine Steuerinformation oder gegebenenfalls eine Steuerinformation und eine Adressinformation enthalten kann. Weiterhin besteht die Möglichkeit, die Umpoleinrichtung in der Weise zu verwenden, dass sie im Wesentlichen als gesteuerter Gleichrichter eingesetzt wird, sodass bei AC-Versorgungsspannung eine bitmusterabhängige Folge von Phasen mit Gleichrichtung und Phasen ohne Gleichrichtung der Versorgungsspannung übertragen wird. Bei einer solchen letztgenannten Kodierung würde keine Unterbrechung der Versorgungsspannung erfolgen.

Weiterhin ist zu beachten, dass auch Rückmeldungen vom Verbraucher an die zentrale Steuereinheit 2 möglich sind, siehe beispielsweise die Belastungseinrichtung 17, die Teil des Vorschaltgerätes 18 oder auch der Steuer-/Überwachungseinrichtung 13 sein kann. Die Belastungseinrichtung 17 wird durch den Verbraucher kurzzeitig wirksam geschaltet und führt beispielsweise zu einem Absinken des Laststroms oder der entsprechenden Spannung. Durch die Betätigung der Belastungseinrichtung 17 ergibt sich ein entsprechender Belastungspuls oder eine Folge von Belastungspulsen bei mehrfacher Verwendung der Belastungseinrichtung. Eine Folge der Belastungspulse kann ebenfalls eine Kodierung eines Informationssignals darstellen, welches in diesem Fall allerdings vom Verbraucher 7 an die zentrale Steuereinheit 2 übertragen wird. Zur Erfassung der Belastungspulse dient die Strom-/Spannungserfassungseinrichtung 9, siehe Figur 1. Dadurch ist jeder Verbraucher in der Lage, beispielsweise Statusinformationen, Quittungssignale oder dergleichen an die zentrale Steuereinheit 2 zu übermitteln.

In Figur 6 ist für eine DC-Versorgungsspannung eine Anzahl von Polaritätswechseln dargestellt. D. h., bei den entsprechenden Abschnitten 31, 33, 35 und 37 wird die DC-Versorgungsspannung unverändert übertragen, während sie in den Abschnitten 32, 34 und 36 umgepolt wurde, siehe hierzu Figuren 1 und 2. Die verschiedenen Abschnitte 31 bis 37 werden über die Versorgungsleitung 6 an zumindest einen Verbraucher 7 übertragen und dort mittels der Spannungsdetektionseinrichtung 29 als Umpoldetektiereinrichtung 12 erfasst, siehe Figur 5. Durch die verschiedenen Polaritätswechsel ergibt sich ein Umpolsignal, welches durch die Umwandeleinrichtung 14 in ein digitales Informationssignal oder Bitmuster umgesetzt wird.

In Figur 6 sind zwei unterschiedliche Ausführungsbeispiele für ein generiertes Informationssignal beziehungsweise Bitmuster dargestellt. Es ist beispielsweise denkbar, dass jeder Umpolvorgang, siehe das Umpolen zwischen Abschnitten 31 und 32, ein Bit generiert, siehe in Figur 6 in der rechten Hälfte das obere Diagramm. Bei jedem weiteren Umpolen wird jeweils wieder ein entsprechendes Bit generiert, siehe beispielsweise Umpolen von Abschnitt 32 auf 33, von 33 auf 34 usw. Ebenfalls ist denkbar, dass ein Bit einem umgepolten Abschnitt der Versorgungsspannung entspricht, siehe Figur 6 auf der rechten Seite im unteren Diagramm. D. h., dass ein Bit beispielsweise durch den umgepolten Abschnitt 32 über dessen gesamte Länge erzeugt wird. Dies gilt analog für die anderen umgepolten Abschnitte 34 und 36.

Die entsprechende Kodierung des Informationssignals kann durch das zeitliche Aufeinanderfolgen der entsprechenden Bits, die zeitliche Länge unterschiedlicher Bits und entsprechende Kombinationen und weitere Auswertungen des Bitmusters kodiert sein. Es ist weiterhin denkbar, dass beispielsweise ein erstes Umpolen ein "positives" Bit und ein direkt anschließendes Umpolen ein "negatives" Bit generiert, sodass auch Bitfolgen möglich sind, die aus den positiven oder negativen Flankensteilheiten (+/- d/d_{T}) abgeleitet werden.

Erfindungsgemäß ergibt sich insbesondere bei DC-Spannungsversorgung, d. h. bei Batteriebetrieb einer Not-/Sicherheitsbeleuchtungsanlage eine einfache und sichere Übermittlung einer Information in digitaler Weise als Bitmuster, indem einfache Umpolvorgänge durchgeführt werden. Die entsprechenden Verbraucher weisen geeignete Einrichtungen zum Überwachen, Erkennen und Dekodieren der Folge von Polaritätswechseln aufgrund der Umpolung der Leistungsversorgung auf. Dabei besteht weiterhin die Möglichkeit, die Umpoleinrichtung und die entsprechende Detektion der Polaritätswechsel auch bei AC-Versorgungsspannung, d. h. bei Netzspannung zu verwenden.

Bei der beschriebenen Anordnung erweist sich insbesondere der Schaltungsteil 13 als signifikant für die Realisierbarkeit des Verfahrens, da durch die vorgeschaltete zusätzliche Gleichrichtung 20 kritische Umladeverluste durch insbesondere Kondensatoren im elektronischen Vorschaltgerät 18, 22 vermieden werden, da die Umpolvorgänge in diesem Schaltungsteil nicht als solche wirken, da sich dort die Polarität nicht ändert, sondern lediglich eine zeitliche begrenzte Unterbrechung einstellt.

Ohne Schaltungsteil 13 müssen die Eingangskapazitäten des elektronischen Vorschaltgerätes mit jedem Umpolvorgang komplett umgeladen werden, was zu erhöhten Umladeverlusten führt und die Baugruppen, insbesondere die Umpoleinrichtung 8 der zentralen Steuereinheit 2, unzulässig erwärmt sowie erhöhte EMV-kritische Störspannungen auf der Spannungsversorgungsleitung 6 verursacht.

## Patentansprüche

1. Not-/Sicherheitsbeleuchtungsanlage (1) mit zumindest einer zentralen Steuereinheit (2), einer AC- und DC-Spannungsversorgung (3, 4), einer zwischen beiden Spannungsversorgungen (3, 4), umschaltbaren Umschalteinrichtung (5) und einer Anzahl von mit der zentralen Steuereinheit (2) über eine Spannungsversorgungsleitung (6) verbundenen Verbrauchern (7), **dadurch gekennzeichnet, dass** die zentrale Steuereinheit (2) eine zumindest der DC-Spannungsversorgung (4) zugeordnete Umpoleinrichtung (8) aufweist, welche zur binären Kodierung eines Informationssignals mittels einer Folge von Polaritätswechseln der von der Spannungsversorgung (4) bereitgestellten Versorgungsspannung ansteuerbar ist, welches kodierte Informationssignal über die Versorgungsspannung von der zentralen Steuereinheit (2) über die Spannungsversorgungsleitung (6) an wenigstens einen Verbraucher (7) übermittelbar ist.

2. Not-/Sicherheitsbeleuchtungsanlage nach Anspruch 1, **dadurch gekennzeichnet, dass** die Umpoleinrichtung (8) zwischen DC-Spannungsversorgung (4) und Umschalteinrichtung (5) angeordnet ist.

3. Not-/Sicherheitsbeleuchtungsanlage nach 1 oder 2, **dadurch gekennzeichnet, dass** die Umpoleinrichtung (8) zwischen Umschalteinrichtung (5) und Spannungsversorgungsleitung (6) angeordnet ist.

4. Not-/Sicherheitsbeleuchtungsanlage nach einem der vorangehenden Ansprüche, **dadurch gekennzeichnet, dass** die zentrale Steuereinheit (2) eine Strom-/Spannungserfassungseinrichtung (9) aufweist.

5. Not-/Sicherheitsbeleuchtungsanlage nach einem der vorangehenden Ansprüche, **dadurch gekennzeichnet, dass** jeweils eine Umpoleinrichtung (8) zumindest jedem Endstromkreis zugeordnet ist, und/oder die Umpoleinrichtung (8) eine Vollbrückenanordnung (10) von Schalteinheiten (11) aufweist.

6. Not-/Sicherheitsbeleuchtungsanlage nach einem der vorangehenden Ansprüche, **dadurch gekennzeichnet, dass** der Verbraucher (7) eine Umpoldetektionseinrichtung (14) zur Detektion von Polaritätswechseln der Versorgungsspannung aufweist, und insbesondere durch die Umpoldetektionseinrichtung (12) Strom und/oder Spannung der Versorgungsspannung überwachbar sind.

7. Not-/Sicherheitsbeleuchtungsanlage nach einem der vorangehenden Ansprüche, **dadurch gekennzeichnet, dass** dem Verbraucher (7) eine Steuer-/Überwachungseinrichtung (13) zugeordnet ist, welche zumindest die Umpoldetektions-einrichtung (12) aufweist und die Steuer- /Überwachungseinrichtung eine Folge von Polaritätswechseln der Versorgungsspannung in ein binäres Verbraucherinformationssignal umsetzende Umwandeleinrichtung (14) aufweist.

8. Not-/Sicherheitsbeleuchtungsanlage nach einem der vorangehenden Ansprüche, **dadurch gekennzeichnet, dass** das Verbraucherinformationssignal zusätzlich zu einer Steuerinformation zur eigentlichen Steuerung des Verbrauchers (7) eine Adressinformation zum selektiven Ansprechen eines jeden Verbrauchers oder zum gruppenweisen Ansprechen einer Mehrzahl von Verbrauchern umfasst.

9. Not-/Sicherheitsbeleuchtungsanlage nach einem der vorangehenden Ansprüche, **dadurch gekennzeichnet, dass** die Steuer-/Überwachungseinrichtung (13) als separates mit jeweils dem Verbraucher (79 verbindbares oder in diesem einsetzbares Modul (15) ausgebildet ist.

10. Not-/Sicherheitsbeleuchtungsanlage nach einem der vorangehenden Ansprüche, **dadurch gekennzeichnet, dass** bei AC-Versorgungsspannung eine Strom-/Spannungsvariationseinrichtung (16) zur binären Kodierung eines über die Spannungsversorgungsleitung (6) übertragbaren in der Versorgungsspannung enthaltenden Informationssignals vorgesehen ist.

11. Not-/Sicherheitsbeleuchtungsanlage nach einem der vorangehenden Ansprüche, **dadurch gekennzeichnet, dass** die Umpoleinrichtung (8) als Strom/Spannungsvariationseinrichtung (16) einsetzbar ist und die Umpoleinrichtung (8) als Gleichrichter bei AC-Versorgungsspannung einsetzbar ist.

12. Not- /Sicherheitsbeleuchtungsanlage nach einem der vorangehenden Ansprüche, **dadurch gekennzeichnet, dass** der Verbraucher (7) eine Belastungseinrichtung (17) zur Beeinflussung eines Laststroms aufweist und insbesondere die Beeinflussung des Laststroms aus einer Anzahl von ein Rückinformationssignal kodierenden Belastungspulsen gebildet ist.

13. Not-/Sicherheitsbeleuchtungsanlage nach einem der vorangehenden Ansprüche, **dadurch gekennzeichnet, dass** der Verbraucher (7) ein elektrisches oder elektronisches Vorschaltgerät (18) aufweist und/oder die Steuer-/Überwachungseinrichtung (13) eine Überspannungsschutzeinrichtung (19) und/oder einen Gleichrichter (20) aufweist.

14. Not-/Sicherheitsbeleuchtungsanlage nach einem der vorangehenden Ansprüche, **dadurch gekennzeichnet, dass** die Steuer-/Überwachungseinrichtung (13) einen Steueranschluss (21) zur Steuerung und/oder Überwachung einer Laststeuereinrichtung (22), wie Vorschaltgeräte oder dergleichen, aufweist.

15. Verfahren zur Steuerung und/oder Überwachung einer Not-/Sicherheitsbeleuchtungsanlage mit zumindest einer zentralen Steuereinheit (2) und mit dieser über eine Spannungsversorgungsleitung (6) verbundenen Verbrauchern (7), wobei ein binär kodiertes Informationssignal als Teil einer Versorgungsspannung über die Spannungsversorgungsleitung von der zentralen Steuereinheit (2) an zumindest einen Verbraucher (7) übertragen wird, welche zentrale Steuereinheit (2) mit einer AC- und DC-Spannungsversorgung selektiv verbunden ist, **dadurch gekennzeichnet, dass** eine binäre Kodierung des Informationssignals durch eine Folge von Polaritätswechseln der Versorgungsspannung mittels einer Umpoleinrichtung (8) der zentralen Steuereinheit (2) erfolgt.

16. Verfahren nach Anspruch 15, **dadurch gekennzeichnet, dass** die DC-Versorgungsspannung umgepolt wird.

17. Verfahren nach Anspruch 15 oder 16, **dadurch gekennzeichnet, dass** der Verbraucher (7) die Folge von Polaritätswechseln mittels einer Umpoldetektions-einrichtung (12) erkennt und als binäres Informationssignal auswertet und das binäre Informationssignal Steuer- und zusätzlich Adressinformationen enthält.

18. Verfahren nach einem der vorangehenden Ansprüche 15 bis 17, **dadurch gekennzeichnet, dass** bei AC-Versorgungsspannung eine Folge von Variationen der Versorgungsspannung zur Kodierung eines binären Informationssignals erfolgen und die Umpoleinrichtung (8) die AC-Versorgungsspannung durch Übermitteln von Spannungsphasen mit und ohne Gleichrichtung variiert.

19. Verfahren nach einem der vorangehenden Ansprüche 15 bis 18, **dadurch gekennzeichnet, dass** der Verbraucher (7) wenigstens einen Belastungspuls generiert, der als Verbraucherinformationssignal über die Spannungsversorgungsleitung (6) an die zentrale Steuereinheit (2) übermittelt und von dieser detektiert und ausgewertet wird und Belastungspulse in zeitlich sequentieller Folge zur binären Kodierung des Verbraucherinformationssignals übermittelt werden.

20. Verfahren nach einem der vorangehenden Ansprüche 15 bis 19, **dadurch gekennzeichnet, dass** die Umpoldetektionseinrichtung (12) Strom und/oder Spannung überwacht und mittels einer Überspannungsschutzeinrichtung (19) und/oder Gleichrichter (20) als Teil einer dem Verbraucher zugeordneten Steuer-/Überwachungseinrichtung (13) ein Überspannungsschutz und/oder eine Gleichrichtung durchgeführt werden.

## Claims

1. Emergency/safety lighting system (1) comprising at least one central control unit (2), an AC and DC power supply (3, 4), a switching device (5) that is switchable between the two power supplies (3, 4), and a number of loads (7) connected to the central control unit (2) via a power supply line (6), **characterised in that** the central control unit (2) comprises a pole reversal device (8) which is associated at least with the DC power supply (4) and which can be actuated for the binary encoding of an information signal by means of a series of polarity reversals of the supply voltage provided by the power supply (4), which encoded information signal can be transmitted to at least one load (7) via the power supply line (6) by mean of the power supply from the central control unit (2).

2. Emergency/safety lighting system according to claim 1, **characterised in that** the pole reversal device (8) is arranged between the DC power supply (4) and the switching device (5).

3. Emergency/safety lighting system according to either claim 1 or claim 2, **characterised in that** the pole reversal device (8) is arranged between the switching device (5) and the power supply line (6).

4. Emergency/safety lighting system according to any of the preceding claims, **characterised in that** the central control unit (2) comprises a current/voltage detection device (9).

5. Emergency/safety lighting system according to any of the preceding claims, **characterised in that** one pole reversal device (8) is assigned at least to each subcircuit, and/or the pole reversal device (8) comprises a full bridge arrangement (10) of switching units (11).

6. Emergency/safety lighting system according to any of the preceding claims, **characterised in that** the load (7) comprises a pole reversal detection device (14) for detecting polarity reversals of the supply voltage, and current and/or voltage of the supply voltage can be monitored in particular by means of the pole reversal detection device (12).

7. Emergency/safety lighting system according to any of the preceding claims, **characterised in that** a control/monitoring device (13) is assigned to the load (7) and comprises at least the pole reversal detection device (12), and the control/monitoring device comprises a converter (14) that converts a series of polarity reversals of the supply voltage into a binary load information signal.

8. Emergency/safety lighting system according to any of the preceding claims, **characterised in that** the load information signal comprises, in addition to control information for actual control of the load (7), address information for selectively operating each load or for operating a plurality of loads in groups.

9. Emergency/safety lighting system according to any of the preceding claims, **characterised in that** the control/monitoring device (13) is designed as a separate module (15) that can be connected to the load (7) in each case or can be used therein.

10. Emergency/safety lighting system according to any of the preceding claims, **characterised in that**, for AC supply voltage, a current/voltage variation device (16) is provided for the binary encoding of an information signal that is contained in the supply voltage and can be transmitted via the power supply line (6).

11. Emergency/safety lighting system according to any of the preceding claims, **characterised in that** the pole reversal device (8) can be used as a current/voltage variation device (16) and the pole reversal device (8) can be used as a rectifier for AC supply voltage.

12. Emergency/safety lighting system according to any of the preceding claims, **characterised in that** the load (7) comprises a loading device (17) for influencing a load current and in particular the load current is influenced by a number of loading pulses encoding a feedback signal.

13. Emergency/safety lighting system according to any of the preceding claims, **characterised in that** the load (7) comprises an electrical or electronic ballast (18) and/or the control/monitoring device (13) comprises an overvoltage protection device (19) and/or a rectifier (20).

14. Emergency/safety lighting system according to any of the preceding claims, **characterised in that** the control/monitoring device (13) comprises a control terminal (21) for controlling and/or monitoring a load control device (22), such as ballasts or the like.

15. Method for controlling and/or monitoring an emergency/safety lighting system comprising at least one central control unit (2) and loads (7) connected to said control unit via a power supply line (6), a binary encoded information signal being transmitted to at least one load (7) as part of a supply voltage via the power supply line of the central control unit (2), which central control unit (2) is selectively connected to an AC and DC power supply, **characterised in that** the information signal is binary encoded by a series of polarity reversals of the supply voltage by means of a pole reversal device (8) of the central control unit (2).

16. Method according to claim 15, **characterised in that** the polarity of the DC supply voltage is reversed.

17. Method according to either claim 15 or claim 16, **characterised in that** the load (7) identifies the series of polarity reversals by means of a pole reversal detection device (12) and interprets said series as a binary information signal, and the binary information signal contains control information and, in addition, address information.

18. Method according to any of the preceding claims 15 to 17, **characterised in that**, for AC supply voltage, a series of variations of the supply voltage takes place for encoding a binary information signal and the pole reversal device (8) varies the AC supply voltage by transmitting voltage phases with and without rectification.

19. Method according to any of the preceding claims 15 to 18, **characterised in that** the load (7) generates at least one loading pulse which is transmitted as a load information signal to the central control unit (2) via the power supply line and is detected and evaluated by said control unit, and loading pulses are transmitted in chronological sequence for the binary encoding of the load information signal.

20. Method according to any of the preceding claims 15 to 19, **characterised in that** the pole reversal detection device (12) monitors current and/or voltage and overvoltage protection and/or rectification are carried out by means of an overvoltage protection device (19) and/or rectifier (20) as part of a control/monitoring device (13) assigned to the load.

## Revendications

1. Installation d'éclairage de secours/de sécurité avec au moins une unité de commande (2) centrale, une alimentation en tension CA et CC (3, 4), un équipement de commutation (5) commutable entre les deux alimentations en tension (3, 4), et un certain nombre de consommateurs (7) raccordés à l'unité de commande (2) centrale par le biais d'une ligne d'alimentation en tension (6), **caractérisée en ce que** l'unité de commande (2) centrale présente un équipement d'inversion de polarité (8), affecté au moins à l'alimentation en tension CC (4), qui peut être commandé pour le codage binaire d'un signal d'information au moyen d'une succession de changements de polarité de la tension d'alimentation fournie par l'alimentation en tension (4), lequel signal d'information codé peut être transmis par le biais de la tension d'alimentation à partir de l'unité de commande (2) centrale à au moins un consommateur (7) par le biais de la ligne d'alimentation en tension (6).

2. Installation d'éclairage de secours/de sécurité selon la revendication 1, **caractérisée en ce que** l'équipement d'inversion de polarité (8) est disposé entre l'alimentation en tension CC (4) et l'équipement de commutation (5).

3. Installation d'éclairage de secours/de sécurité selon la revendication 1 ou 2, **caractérisée en ce que** l'équipement d'inversion de polarité (8) est disposé entre l'équipement de commutation (5) et la ligne d'alimentation en tension (6).

4. Installation d'éclairage de secours/de sécurité selon l'une des revendications précédentes, **caractérisée en ce que** l'unité de commande (2) centrale présente un équipement de détection d'intensité/tension (9).

5. Installation d'éclairage de secours/de sécurité selon l'une des revendications précédentes, **caractérisée en ce que** respectivement un équipement d'inversion de polarité (8) est affecté à au moins chaque circuit électrique final, et/ou l'équipement d'inversion de polarité (8) présente un dispositif en pont intégral (10) d'unités de commutation (11).

6. Installation d'éclairage de secours/de sécurité selon l'une des revendications précédentes, **caractérisée en ce que** le consommateur (7) présente un équipement de détection d'inversion de polarité (14) pour la détection de changements de polarité de la tension d'alimentation, et en particulier l'intensité et/ou la tension de la tension d'alimentation peuvent être surveillées par l'équipement de détection d'inversion de polarité (12).

7. Installation d'éclairage de secours/de sécurité selon l'une des revendications précédentes, **caractérisée en ce qu'**un équipement de commande/surveillance (13) est affecté au consommateur (7) et présente au moins l'équipement de détection d'inversion de polarité (12), et l'équipement de commande/surveillance présente un équipement de conversion (14) qui transforme une séquence de changements de polarité de la tension d'alimentation en un signal d'information consommateur binaire.

8. Installation d'éclairage de secours/de sécurité selon l'une des revendications précédentes, **caractérisée en ce que** le signal d'information consommateur, en plus d'une information de commande pour la commande proprement dite du consommateur (7), comprend une information d'adresse pour la réaction sélective de chaque consommateur ou pour la réaction par groupes d'une pluralité de consommateurs.

9. Installation d'éclairage de secours/de sécurité selon l'une des revendications précédentes, **caractérisée en ce que** l'équipement de commande/surveillance (13) est constitué en tant que module (15) séparé pouvant être raccordé respectivement au consommateur (7) ou pouvant être placé dans celui-ci.

10. Installation d'éclairage de secours/de sécurité selon l'une des revendications précédentes, **caractérisée en ce que**, dans le cas d'une tension d'alimentation CA, un équipement de variation d'intensité/tension (16) est prévu pour le codage binaire d'un signal d'information, contenu dans la tension d'alimentation, pouvant être transmis par le biais de la ligne d'alimentation en tension (6).

11. Installation d'éclairage de secours/de sécurité selon l'une des revendications précédentes, **caractérisée en ce que** l'équipement d'inversion de polarité (8) peut être mis en oeuvre en tant qu'équipement de variation intensité/tension (16), et l'équipement d'inversion de polarité (8) peut être mis en oeuvre en tant que redresseur dans le cas d'une tension d'alimentation CA.

12. Installation d'éclairage de secours/de sécurité selon l'une des revendications précédentes, **caractérisée en ce que** le consommateur (7) présente un équipement de charge (17) destiné à influencer un courant de charge, et en particulier l'influence exercée sur le courant de charge est formée d'un certain nombre d'impulsions de charge codant un signal de retour d'information.

13. Installation d'éclairage de secours/de sécurité selon l'une des revendications précédentes, **caractérisée en ce que** le consommateur (7) présente un ballast (18) électrique ou électronique et/ou **en ce que** l'équipement de commande/surveillance (13) présente un équipement de protection contre les surtensions (19) et/ou un redresseur (20).

14. Installation d'éclairage de secours/de sécurité selon l'une des revendications précédentes, **caractérisée en ce que** l'équipement de commande/surveillance (13) présente une connexion de commande (21) pour la commande et/ou la surveillance d'un équipement de commande de charge (22), comme des ballasts ou similaires.

15. Procédé de commande et/ou de surveillance d'une installation d'éclairage de secours/de sécurité avec au moins une unité de commande (2) centrale et des consommateurs raccordés à celle-ci par le biais d'une ligne d'alimentation en tension (6), un signal d'information codé en binaire étant transmis en tant que partie d'une tension d'alimentation à au moins un consommateur (7) à partir de l'unité de commande (2) centrale par le biais de la ligne d'alimentation en tension, laquelle unité de commande (2) centrale est raccordée de façon sélective à une alimentation en tension CA ou CC, **caractérisé en ce qu'**un codage binaire du signal d'information s'effectue par une succession de changements de polarité de la tension d'alimentation au moyen d'un équipement d'inversion de polarité (8) de l'unité de commande (2) centrale.

16. Procédé selon la revendication 15, **caractérisé en ce que** la polarité de la tension d'alimentation CC est inversée.

17. Procédé selon la revendication 15 ou 16, **caractérisé en ce que** le consommateur (7) reconnaît la séquence de changements de polarité au moyen d'un équipement de détection d'inversion de polarité (12) et l'analyse en tant que signal d'information binaire, et **en ce que** le signal d'information binaire contient des informations de commande et en plus des informations d'adresse.

18. Procédé selon l'une des revendications précédentes 15 à 17, **caractérisé en ce que**, dans le cas d'une tension d'alimentation CA, une succession de variations de la tension d'alimentation sont effectuées pour le codage d'un signal d'information binaire, et l'équipement d'inversion de polarité (8) fait varier la tension d'alimentation CA par la transmission de phases de tension avec ou sans redressement.

19. Procédé selon l'une des revendications précédentes 15 à 18, **caractérisé en ce que** le consommateur (7) génère au moins une impulsion de charge qui est transmise en tant que signal d'information consommateur par le biais de la ligne d'alimentation en tension (6) à l'unité de commande (2) centrale et est détectée par celle-ci et analysée, et des impulsions de charge sont transmises dans une succession séquentielle dans le temps pour le codage binaire du signal d'information consommateur.

20. Procédé selon l'une des revendications précédentes 15 à 19, **caractérisé en ce que** l'équipement de détection d'inversion de polarité (12) surveille l'intensité et/ou la tension, et **en ce qu'**une protection contre les surtensions et/ou un redressement sont effectués au moyen d'un équipement de protection contre les surtensions (19) et/ou de redresseurs (20) en tant que partie d'un équipement de commande/surveillance (13) affecté au consommateur.
